# EUROPEAN PATENT SPECIFICATION

(11) **EP 1 560 000 B1**
(45) Date of publication and mention of the grant of the patent: **21.03.2007**
(21) Application number: 05100428.1
(22) Date of filing: 24.01.2005
(51) Int. Cl.: G01F 1/684, G01P 5/12, G01W 1/17

(54) **A resistive anemometer and a thermal comfort temperature sensor device incorporating such an anemometer**
Resistives Anemometer und thermischer Komfort-Temperatursensor ein solches Anemometer enthaltend
Anémomètre résistif et dispositif de mesure de confort thermique comprenant cet anémomètre

(30) Priority: 27.01.2004 IT TO20040029
(43) Date of publication of application: 03.08.2005
(73) Proprietor: C.R.F. SOCIETA' CONSORTILE PER AZIONI, 10043 Orbassano (TO) (IT)
(72) Inventor: CANTA, Carlo, I-10043, ORBASSANO (Torino) (IT); MALVICINO, Carloandrea, I-10043, ORBASSANO (Torino) (IT)
(74) Representative: Quinterno, Giuseppe

(56) References cited:
- EP-A- 0 073 858
- WO-A-03/052461
- US-A- 5 436 852
- PATENT ABSTRACTS OF JAPAN vol. 0061, no. 59 (P-136), 20 August 1982 (1982-08-20) & JP 57 077967 A (SANYO ELECTRIC CO LTD), 15 May 1982 (1982-05-15)

## Description

The present invention relates to a resistive anemometer and to a thermal comfort sensor device including such an anemometer.

More specifically, a first object of the invention is to provide a resistive anemometer of the type which includes a support structure carrying
a first resistive element, intended to be exposed to a flow of air and having a resistance which is variable in dependence on the speed of the said flow, and
a second resistive element with a resistance which varies as a function of the ambient temperature;
the said resistive elements being connected in a bridge circuit with a first pair of terminals operatively connected to a source of voltage supply and a second pair of terminals operatively connected to amplification and signal processing circuit devices.

Resistive anemometers of the above type are known in the art, in which the aforesaid first and second resistive elements are mounted on the same surface of a single support substrate exposed to the working environment. Such devices have the disadvantage that in use, in a motor car for example, sunlight can shine on both the aforesaid resistive elements, causing the resistance, particularly that of the resistive element acting as ambient temperature sensor, to vary in an inappropriate manner.

One object of the present invention is to provide a resistive anemometer of the type described above which makes it possible to eliminate or at least limit the problem outlined above in connection with prior art resistive anemometers.

This and other objects are achieved according to the invention by providing a resistive anemometer of the type described above, characterised in that the said support structure includes first and second, respectively upper and lower plates, of an electrically insulating material, disposed one above the other and essentially parallel in a horizontal operating position, interconnected by a plurality of pillars operable to act as electrical connection elements; the upper plate carrying the said first resistive element on its upper surface, connected to a first pair of the said pillars, the lower plate carrying the said second resistive element on its lower surface, connected to a second pair of the said pillars.

Thanks to this arrangement, the resistive element sensitive to the ambient temperature is protected from solar radiation, both by the "shade" provided by the upper plate and by the fact that it is fixed to the underside of the lower plate.

An additional object of the invention is to provide a thermal comfort sensor, in particular for fitting to an anthropomorphic test dummy, which incorporates a resistive anemometer such as that described above.

Further characteristics and advantages of the invention will become apparent from the detailed description which follows, provided purely by way of non-limitative example, with reference to the appended drawings, in which:
Figure 1 is a circuit diagram of a prior art resistive anemometer, and
Figure 2 is a perspective view showing a resistive anemometer of the invention, in particular incorporated in a thermal comfort sensor for an anthropomorphic test dummy.

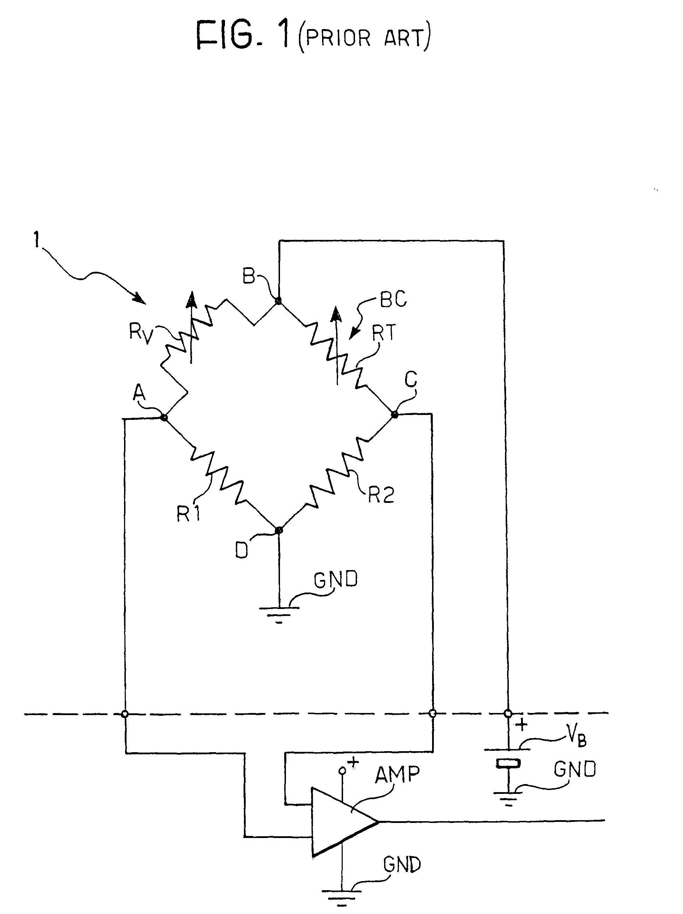

In Figure 1, a resistive anemometer, including a bridge circuit BC in a manner known per se, is indicated 1. This circuit is essentially a so-called Wheatstone bridge, with four vertices or terminals A, B, C and D.

In the side between the terminals or vertices A and B, the bridge circuit BC includes a first resistive element Rᵥ, intended to be exposed to a flow of air and having an electrical resistance which varies in dependence on the speed of this flow.

A second resistive element R_{T} is arranged in the adjacent side between the terminals or vertices B and C, having an electrical resistance which varies in dependence on the ambient temperature.

The bridge circuit BC also includes third and fourth resistive elements, indicated R1 and R2 respectively, each having a predetermined and substantially unvarying electrical resistance. These resistive elements are connected in the side between the vertices A and D and in the side between vertices C and D respectively.

In the diagram of Figure 1, the opposite terminals or vertices B and D are connected to a source of supply voltage V_{B}, such as a battery. In the example illustrated, the positive pole of the battery V_{B} is connected to the terminal or vertex B, while the negative pole is connected to the terminal or vertex D by means of an earth conductor GND.

The opposite terminals or vertices A and C are connected to an amplifier circuit AMP, which can be connected in turn to possible further circuits for processing the signal. Such circuits are known per se and have therefore not been shown.

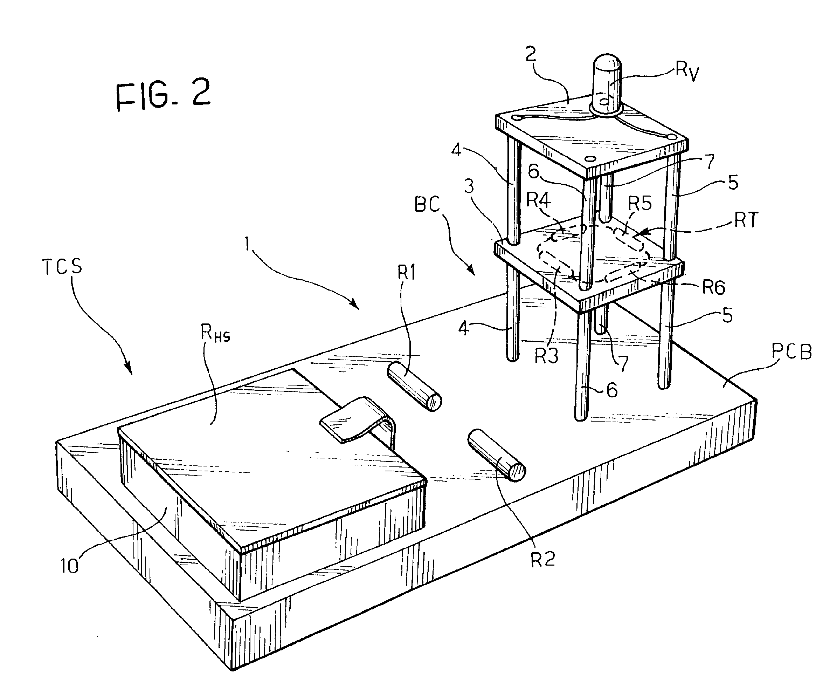

In Figure 2 is shown an embodiment of a resistive anemometer according to the invention. In this drawing, parts and elements which correspond to those already described with reference to Figure 1 have been given the same reference numerals or letters.

The resistive anemometer 1 shown in Figure 2 comprises a support structure including upper and lower plates 2, 3 of an electrically insulating material, arranged one above the other, essentially parallel in a horizontal operating position.

The plates 2 and 3 are connected to each other by a plurality of pillars 4, 5, 6 and 7. These pillars are conveniently constituted by metal rods, so that they are also able to act as electrical connector elements.

The upper plate 2 in particular is fixed to the top ends of the pillars 4-7, while these latter pass through the lower plate 3, which is positioned approximately halfway up them.

The resistive element R_{V}, sensitive to the speed of the air flow which flows past it, is supported by the upper plate 2 and secured to the upper surface thereof, and its terminals or rheofores are connected to the pillars 4 and 5.

In the embodiment illustrated, the second resistive element R_{T}, sensitive to the ambient temperature, is made up of a plurality of interconnected resistors R₃-R₆, connected between the pillars 6 and 7 of the support structure of the anemometer. This construction of the element R_{T} is of course not binding since it could be constituted by a different number of resistors, and possibly by only one.

In any case, it is convenient for the resistive element R_{T} to be carried by the lower plate 3, on the lower surface thereof, which in operation faces downwardly.

The pillars 4-6 are fixed to a printed circuit board generally indicated PCB. In the embodiment illustrated, the structure of the anemometer as described above is carried on the upper surface of the printed circuit board PCB. It is convenient if the resistive elements R1 and R2, constituted for example by resistors which can be fixed using SMD technology, are also secured to this surface.

It is convenient if the signal amplifying and processing circuit devices, as well as those of the power supply to the anemometer, are also carried by the printed circuit board PCB, for example on the surface opposite that from which the structure including the plates 2 and 3 and the associated pillars 4-7 extends.

The resistive anemometer described above is suited for use in a wide variety of applications.

In the embodiment illustrated in Figure 2, the anemometer 1 forms part of a thermal comfort sensor generally indicated TCS. Such a thermal comfort sensor can be used, for example, in an anthropomorphic type of test dummy, for simulating the thermal behaviour of a portion of the skin of an occupant of the passenger compartment of a motor vehicle. Such a sensor makes it possible, for example, to simulate the exchange of heat between part of the body of this occupant and the air in the compartment.

In the embodiment illustrated, on the same printed circuit board PCB, in addition to the anemometer 1, the thermal comfort sensor TCS includes a planar resistor R_{HS}, for example a platinum resistor, arranged above a thermally and electrically insulating element 10 applied to the printed circuit board PCB.

The resistor R_{HS} is operable, in a manner known per se, to act at the same time both as a heater, to simulate the effect of human metabolism, and as a skin temperature sensor.

The resistor R_{HS} is also connected to processing and control circuits which can conveniently be fixed to the lower surface of the printed circuit board PCB.

A plurality of thermal comfort sensors such as that just described can conveniently be applied to an anthropomorphic test dummy for simulating heat exchange as illustrated, for example, in the earlier international Patent Application WO 03/052461-A1 by the same Applicant.

Naturally, the principle of the invention remaining unchanged, embodiments and manufacturing details may vary widely from those described and illustrated purely by way of non-limitative example, without departing thereby from the scope of the invention, as defined in the appended Claims.

## Claims

1. A resistive anemometer (1) including a support structure (2-7) carrying
a first resistive element (R_{V}) intended to be exposed to a flow of air, the resistance of which is variable in dependence on the speed of the said flow, and
a second resistive element (R_{T}), the resistance of which is variable in dependence on the ambient temperature;
the said resistive elements (R_{V}, R_{T}) being connected in a bridge circuit (BC) with a first pair of terminals (B, D) operatively connected to a source of supply voltage (V_{B}), and a second pair of terminals (A, C) operatively connected to circuit devices (AMP) for the amplification and processing of signals;
the anemometer (1) being **characterised in that** the said support structure (2-7) includes first and second respectively upper and lower plates (2, 3) of an electrically insulating material, disposed one above the other, essentially parallel and horizontal in operation, and connected to each other by a plurality of pillars (4-7) operable to act as electrical connector elements; the upper plate (2) carrying the said first resistive element (R_{V}) on its upper surface, connected to a first pair of the said pillars (4, 5); the lower plate (3) carrying the said second resistive element (R_{T}) on its lower surface, connected to a second pair (6, 7) of the said pillars.

2. A resistive anemometer according to Claim 1, in which the said pillars (4-7) are connected mechanically and electrically to a printed circuit board (PCB); the anemometer (1) also including third and fourth resistive elements (R₁, R₂) fixed to the said printed circuit board (PCB), the resistances of both being predetermined and substantially invariable.

3. A resistive anemometer according to Claim 2, in which the said support structure (2-7) and the said third and fourth resistive elements (R₁, R₂) are connected to the same surface of the said printed circuit board (PCB); the said signal amplifying and processing circuit devices (AMP) also being connected to the said printed circuit board (PCB), preferably to the opposite surface of this board (PCB).

4. A thermal comfort sensor (TCS), in particular for an anthropomorphic test dummy, including a resistive anemometer (1) according to one or more of the preceding Claims.

5. A thermal comfort sensor according to Claim 4, including a resistive anemometer (1) according to Claim 2 or Claim 3, in which a resistive device (R_{HS}) operable to act both as electrical heater and as an electric temperature sensor is connected to the surface of the printed circuit board (PCB) to which the support structure (2-7) of the anemometer (1) is connected.

## Patentansprüche

1. Resistiver Windgeschwindigkeitsmesser (1), einschließlich einer Stützkonstruktion (2-7), die Folgendes trägt:
ein erstes Widerstandselement (R_{V}), das dazu bestimmt ist, einem Luftstrom ausgesetzt zu sein und dessen Widerstand abhängig von der Geschwindigkeit des Stroms variabel ist, und
ein zweites Widerstandselement (R_{T}), dessen Widerstand abhängig von der Umgebungstemperatur variabel ist;
wobei die Widerstandselemente (R_{V}, R_{T}) in einer Brückenschaltung (BC) mit einem ersten Paar von Anschlussklemmen (B, D) verbunden sind, welche an einer Quelle von Netzspannung (V_{B}) betriebsbereit angeschlossen sind, und ein zweites Paar von Anschlussklemmen (A, C) an Schaltvorrichtungen (AMP) zum Verstärken und Verarbeiten von Signalen betriebsbereit angeschlossen ist;
wobei der Windgeschwindigkeitsmesser (1) **dadurch gekennzeichnet ist, dass** die Stützkonstruktion (2-7) eine erste und eine zweite obere bzw. untere Platte (2, 3) aus einem elektrisch isolierenden Material umfasst, welche Platten übereinander angeordnet sind, und zwar während des Betriebs im Wesentlichen parallel und horizontal, und durch eine Mehrzahl von Säulen (4-7) miteinander verbunden sind, welche dazu betriebsfähig sind, als elektrische Verbindungselemente zu fungieren; wobei die obere Platte (2), die an ihrer Oberseite das erste Widerstandselement (R_{V}) trägt, mit einem ersten Paar der Säulen (4, 5) verbunden ist; und die untere Platte (3), die an ihrer Unterseite das zweite Widerstandselement (R_{T}) trägt, mit einem zweiten Paar (6, 7) der Säulen verbunden ist.

2. Resistiver Windgeschwindigkeitsmesser gemäß Anspruch 1, bei dem die Säulen (4-7) mit einer gedruckten Leiterplatte (PCB) mechanisch und elektrisch verbunden sind; wobei der Windgeschwindigkeitsmesser (1) auch ein drittes und ein viertes Widerstandselement (R₁, R₂) umfasst, welche an der gedruckten Leiterplatte (PCB) befestigt sind, wobei die Widerstände beider Elemente vorgegeben und im Wesentlichen unveränderlich sind.

3. Resistiver Windgeschwindigkeitsmesser gemäß Anspruch 2, bei dem die Stützkonstruktion (2-7) und das dritte und das vierte Widerstandselement (R₁, R₂) an derselben Fläche der gedruckten Leiterplatte (PCB) angeschlossen sind; wobei die signalverstärkenden und -verarbeitenden Schaltvorrichtungen (AMP) ebenfalls an der gedruckten Leiterplatte (PCB) angeschlossen sind, und zwar vorzugsweise an der gegenüberliegenden Fläche dieser Platte (PCB).

4. Wärmekomfortsensor (TCS), insbesondere für eine dreidimensionale Testpuppe, einschließlich eines resistiven Windgeschwindigkeitsmessers (1) gemäß einem oder mehreren der vorhergehenden Ansprüche.

5. Wärmekomfortsensor gemäß Anspruch 4, einschließlich eines resistiven Windgeschwindigkeitsmessers (1) gemäß Anspruch 2 oder Anspruch 3, wobei eine resistive Vorrichtung (R_{HS}), die dazu betriebsfähig ist, sowohl als elektrische Heizvorrichtung als auch als elektrischer Temperaturfühler zu fungieren, an der Fläche der gedruckten Leiterplatte (PCB) angeschlossen ist, mit welcher die Stützkonstruktion (2-7) des Windgeschwindigkeitsmessers (1) verbunden ist.

## Revendications

1. Anémomètre résistif (1) comprenant une structure de support (2-7) portant
un premier élément résistif (R_{V}) destiné à être exposé à un courant d'air, dont la résistance est variable en fonction de la vitesse dudit courant, et
un deuxième élément résistif (R_{T}), dont la résistance est variable en fonction de la température ambiante ;
lesdits éléments résistifs (R_{V}, R_{T}) étant reliés dans un circuit à pont (BC) avec une première paire de bornes (B, D) reliées de manière opérationnelle à une source de tension d'alimentation (V_{B}), et une deuxième paire de bornes (A, C) reliées de manière opérationnelle à des dispositifs de circuit (AMP) pour l'amplification et le traitement de signaux ;
l'anémomètre (1) étant **caractérisé en ce que** ladite structure de support (2-7) comprend des première et deuxième plaques supérieure et inférieure (2, 3) respectivement d'un matériau électriquement isolant, disposées l'une au-dessus de l'autre, essentiellement parallèles et horizontales en fonctionnement, et reliées l'une à l'autre par une pluralité de colonnes (4-7) pouvant fonctionner pour agir en tant qu'éléments de raccordement ; la plaque supérieure (2) portant ledit premier élément résistif (R_{V}) sur sa surface supérieure, reliée à une première paire desdites colonnes (4, 5) ; la plaque inférieure (3) portant ledit deuxième élément résistif (R_{T}) sur sa surface inférieure, reliée à une deuxième paire (6, 7) desdites colonnes.

2. Anémomètre résistif selon la revendication 1, dans lequel lesdites colonnes (4-7) sont reliées de façon mécanique et électrique à une carte de circuit imprimé (PCB) ; l'anémomètre (1) comprenant également des troisième et quatrième éléments résistifs (R₁, R₂) fixés à ladite carte de circuit imprimé (PCB), les résistances de ces deux-ci étant prédéterminées et sensiblement invariables.

3. Anémomètre résistif selon la revendication 2, dans lequel ladite structure de support (2-7) et lesdits troisième et quatrième éléments résistifs (R₁, R₂) sont reliés à la même surface de ladite carte de circuit imprimé (PCB) ; lesdits dispositifs de circuit d'amplification et de traitement de signal (AMP) étant également reliés à ladite carte de circuit imprimé (PCB), de préférence à la surface opposée de cette carte (PCB).

4. Capteur de confort thermique (TCS), en particulier pour un dispositif anthropomorphe d'essai, comprenant un anémomètre résistif (1) selon une ou plusieurs des revendications précédentes.

5. Capteur de confort thermique selon la revendication 4, comprenant un anémomètre résistif (1) selon la revendication 2 ou la revendication 3, dans lequel un dispositif résistif (R_{HS}) pouvant fonctionner à la fois comme dispositif de chauffage électrique et comme capteur de température électrique est relié à la surface de la carte de circuit imprimé (PCB) à laquelle la structure de support (2-7) de l'anémomètre (1) est reliée.
